# FASCICULE DE BREVET EUROPEEN

(11) **EP 2 714 589 B1**
(45) Date de publication et mention de la délivrance du brevet: **16.12.2015**
(21) Numéro de dépôt: 11723949.1
(22) Date de dépôt: 01.06.2011
(51) Int. Cl.: C01B 25/231

(54) **PROCEDE DE PRODUCTION D'ACIDE PHOSPHORIQUE DU TYPE DIHYDRATE/HEMIHYDRATE**
DIHYDRAT-HEMIHYDRAT-VERFAHREN ZUR HERSTELLUNG VON PHOSPHORSÄURE
DIHYDRATE-HEMIHYDRATE PROCESS FOR PRODUCING PHOSPHORIC ACID

(43) Date de publication de la demande: 09.04.2014
(73) Titulaire: Prayon Technologies, 4480 Engis (BE)
(72) Inventeur: HOXHA, Antoine, B-4121 Neuville-en-Condroz (BE); FATI, Dorina, B-4121 Neuville-en-Condroz (BE)
(74) Mandataire: Coulon, Ludivine
(86) Numéro de dépôt international: PCT/EP2011/059128
(87) Numéro de publication internationale: WO 2012/163425

(56) Documents cités:
- CA-A- 915 883
- GB-A- 1 164 836
- JP-A- 2003 054 944
- US-A- 3 523 754
- US-A- 4 136 151
- US-A- 4 588 570
- US-A- 5 093 088
- US-A1- 2004 047 790
- SCHRÖDTER K ET AL: "Ullmann's Encyclopedia of Industrial Chemistry - Phosphoric Acid and Phosphates", INTERNET CITATION, 15 janvier 2008 (2008-01-15), pages 1-48, XP002593034, Extrait de l'Internet: URL:http://mrw.interscience.wiley.com/emrw /9783527306732/ueic/article/a19_465/curren t.pdf [extrait le 2010-07-20] cité dans la demande

## Description

La présente invention est relative à un procédé de production d'acide phosphorique par attaque de roche phosphatée au moyen d'acide sulfurique.

Le procédé classique de ce type consiste à faire réagir la roche phosphatée avec l'acide sulfurique dans des conditions donnant lieu à une cristallisation de sulfate de calcium dihydrate ou gypse (CaSO₄.2H₂O). La bouillie de gypse obtenue dans un premier réacteur peut être ensuite soumise, dans un second réacteur, à une maturation permettant un grossissement des grains de sulfate formés, et cela pour augmenter la filtrabilité. La bouillie maturée est ensuite filtrée avec obtention d'un acide phosphorique présentant une teneur en P₂O₅ libre de l'ordre de 25 à 35 % en poids. Le gypse obtenu contient encore assez bien de P₂O₅, soit non attaqué, soit cocristallisé, c'est-à-dire fixé dans le réseau cristallin du gypse. Cela limite le rendement d'extraction du P₂O₅ contenu dans le phosphate et rend le gypse impropre à certaines applications.

On connaît également des procédés de production d'acide phosphorique par attaque à l'acide sulfurique donnant, à des températures et concentrations en P₂O₅ et/ou SO₃ plus élevées, une bouillie de sulfate de calcium sous forme d'hémihydrate (CaSO₄.1/2H₂O) ou d'anhydrite. Ces procédés donnent généralement un acide phosphorique concentré et un sulfate bien filtrable, mais le rendement d'extraction du P₂O₅ de ces procédés est inférieur au procédé classique. Dans certain cas, on procède également, après cette attaque, à une conversion du sulfate de calcium hémihydrate obtenu en sulfate de calcium dihydrate (v. Schrödter et al., Phosphoric Acid and Phosphates, Ullman's Encyclopedia of Industrial Chemistry, 2008, pages 8 et 9).

On connaît aussi des procédés comprenant une triple cristallisation de sulfate de calcium d'abord en hémihydrate, puis en dihydrate et enfin à nouveau en hémihydrate (v. US-A-4588570).

En vue d'améliorer les résultats du procédé classique, on a prévu, après séparation de l'acide phosphorique de production à partir de la bouillie de gypse, de mélanger le reste de celle-ci à de l'acide sulfurique concentré et éventuellement de chauffer le tout, pour convertir le gypse en sulfate de calcium hémihydrate. La seconde bouillie ainsi formée est filtrée à son tour et le filtrat acide est recyclé à l'étape d'attaque (voir FR 1485940). Ce procédé améliore nettement le rendement d'extraction en P₂O₅. En effet le P₂O₅ cocristallisé dans le gypse au cours de l'attaque est libéré lors de la solubilisation des cristaux de gypse, tandis que le sulfate de calcium, recristallisé en hémihydrate, est très pur et extrêmement bien filtrable. Toutefois ce procédé nécessite deux filtrations, c'est-à-dire deux filtres, d'où un encombrement énorme de l'installation à l'échelle industrielle.

Suivant une variante de ce procédé, on a prévu, après avoir appliqué les conditions du procédé classique de formation d'une bouillie de gypse, de soumettre directement celle-ci à un mélange avec de l'acide sulfurique et éventuellement à un chauffage, sans en séparer préalablement l'acide phosphorique de production. La bouillie d'hémihydrate obtenue est filtrée en donnant un gâteau d'hémihydrate très pur, mais un filtrat formé d'un mélange d'acide phosphorique et d'acide sulfurique. Pour obtenir un acide phosphorique de production de qualité, il faut alors soumettre ce mélange à une installation de désulfatation, ce qui ne résout donc pas les problèmes d'encombrement. On connaît encore d'autres procédés de production d'acide phosphorique fort semblables au précédent comprenant une conversion de dihydrate en hémihydrate et présentant ces mêmes inconvénients (GB-1164836, US-A-3984525).

On connaît enfin un procédé dans lequel on soumet à nouveau la roche phosphatée aux conditions d'attaque du procédé classique de façon à obtenir une première bouillie dans laquelle le gypse formé présente une taille de grains permettant une bonne filtration. Une partie de cette première bouillie est alors prélevée et soumise à des conditions dans lesquelles le gypse est converti en hémihydrate, en formant ainsi une seconde bouillie. Le reste de la première bouillie est alors mélangé à la seconde et le tout est filtré (voir WO 2005/118470).

Un problème majeur de la production d'acide phosphorique réside dans l'épuisement des gisements de minerais de phosphate riches en P₂O₅. Ces gisements ont été exploités. Il faut à présent se tourner vers des minerais dont la concentration en P₂O₅ est considérée comme pauvre, par exemple des teneurs en P₂O₅ de 30 % en poids ou moins par rapport à la roche phosphatée, et dans certains cas 20% ou moins.

Un procédé permettant d'exploiter de tels minerais et d'en extraire un acide phosphorique de production de haute qualité a été décrit dans la demande de brevet internationale non encore publiée PCT/EP2010/068709. Les conditions d'attaque de ce procédé prévoient une réaction sensiblement stoechiométrique entre l'acide sulfurique introduit et le calcium contenu dans la roche phosphatée, tandis que la teneur en P₂O₅ libre dans la bouillie de cristallisation est maintenue élevée entre 38 et 50% en poids et la température entre 70 et 90°C. D'une manière surprenante, ces conditions donnent lieu à de très fins cristaux de dihydrate stable. Cette bouillie est alors soumise à une augmentation de température pendant laquelle les grains de dihydrate se solubilisent et libèrent le P₂O₅ non attaqué ou cocristallisé, tandis qu'on obtient une cristallisation de sulfate de calcium hémihydrate bien filtrable et un acide phosphorique de production à très faible teneur en SO₃ libre.

Il faut noter que ces minerais pauvres en P₂O₅ présentent fréquemment en outre des teneurs de plus en plus élevées en impuretés. La teneur en impuretés est communément exprimée par le rapport (Al₂o₃ + Fe₂o₃ + MgO)/P₂O₅ X 100, noté aussi MER (Minor Element Ratio). Les phosphates dits classiques sont caractérisés par un rapport MER d'environ 5 jusqu'à 8. Au-delà de 10, la teneur en impuretés est si importante qu'elle commence à influencer négativement la cristallisation du sulfate de calcium sous forme de gypse lors de l'attaque du minerai par l'acide sulfurique. A ces teneurs en impuretés, la production d'acide phosphorique devient problématique, notamment à cause des difficultés de cristallisation de sulfate de calcium dihydrate et de filtration de celui-ci. Cela présente donc un gros inconvénient dans tous les procédés où une filtration a lieu directement après l'attaque de la roche phosphatée.

Dans un procédé tel que décrit dans la demande de brevet non publiée PCT/EP2010/068709, la cristallisation en gypse est également affectée par les impuretés, mais étant donné que ce gypse n'est pas destiné à être filtré, cela ne porte pas à conséquence.

Toutefois, l'étape de conversion de la bouillie de dihydrate en bouillie d'hémihydrate s'avère laborieuse en cas de minerai de phosphate à teneur élevée en impuretés, notamment dans le cas de rapports MER supérieurs à 10, et en particulier supérieurs à 20 ou même à 30. La cristallisation de l'hémihydrate devient de qualité de plus en plus médiocre, ce qui nécessite une augmentation de l'acidité totale (P₂O₅ + SO₃) dans la bouillie de conversion pour remédier à cette mauvaise cristallisation. Cela entraîne fatalement une teneur de plus en plus élevée en SO₃ libre dans la bouillie et la formation d'un acide phosphorique de production de plus en plus fortement pollué par l'acide sulfurique.

La présente invention a pour but de mettre au point un procédé de production d'acide phosphorique par attaque de roche phosphatée de pauvre qualité au moyen d'acide sulfurique qui permette d'obtenir un acide phosphorique de production de qualité et un bon rendement d'extraction du P₂O₅ à partir de la roche. Ce procédé doit en outre pouvoir aisément être appliqué dans une installation classique existante et donc ne pas nécessiter de transformations coûteuses et indéfendables économiquement parlant.

Pour résoudre ces problèmes, il est prévu suivant l'invention un procédé de production d'acide phosphorique, comprenant
- une attaque en milieu aqueux de roche phosphatée par de l'acide sulfurique à une première température comprise entre 70 et 90°C, avec formation d'une première bouillie de cristaux de sulfate de calcium dihydrate en suspension dans une phase aqueuse acide, la phase aqueuse acide de cette bouillie présentant une teneur en P₂O₅ libre comprise entre 38 et 50 % en poids et une teneur en SO₃ libre inférieure à 0,5 % et supérieure à 0,05 % en poids,
- une conversion de cette première bouillie par chauffage à une température supérieure à 90°C, avec solubilisation des cristaux de sulfate de calcium dihydrate et recristallisation du sulfate de calcium solubilisé donnant lieu à une seconde bouillie formée de cristaux de calcium hémihydrate en suspension dans une phase aqueuse à base d'acide phosphorique, et
- une séparation dans la seconde bouillie entre un acide phosphorique de production, présentant une teneur en SO₃ libre inférieure à 2 % et supérieure à 0,05 % en poids, et un gâteau de séparation à base de sulfate de calcium hémihydrate,
ce procédé comprenant en outre, pendant l'attaque, un ajout d'une source de fluor dans la première bouillie en une teneur de 1% à 5% en poids de F par rapport au P₂O₅ contenu dans la roche phosphatée.

Dans la présente demande de brevet, il faut entendre que les teneurs en acide phosphorique libre et en acide sulfurique libre sont exprimées en P₂O₅ libre et en SO₃ libre.

D'une manière tout à fait inattendue, ainsi qu'il sera expliqué par la suite, le procédé suivant l'invention donne lieu pendant l'étape d'attaque dans les conditions précisées à une bouillie de cristaux de dihydrate, alors que l'homme de métier devait s'attendre à la formation d'hémihydrate. La cristallisation en dihydrate n'est pas optimale, les cristaux sont petits, ils présentent une taille de grains ayant un d₅₀ inférieur à 20 µm. En présence d'une roche phosphatée présentant un rapport (Al₂O₃ + Fe₂O₃ + MgO)/P₂O₅ x 100 supérieur à 10, en particulier supérieur à 20, notamment de l'ordre de 30, on remarque que la cristallisation du gypse devient problématique. On remarque en outre qu'après l'ajout de la source de fluor, avantageusement directement dans la cuve d'attaque de la roche phosphatée, la cristallisation du dihydrate est affectée, les cristaux devenant non seulement plus petits, mais en outre hétérogènes. Une telle bouillie présenterait un coefficient de filtration très faible et elle ne pourrait donc être exploitée industriellement dans un processus nécessitant sa filtration. Cet aspect est toutefois sans importance suivant l'invention puisque cette première bouillie n'est pas destinée à être filtrée.

Les conditions d'attaque sont telles qu'elles prévoient une réaction sensiblement stoechiométrique entre l'acide sulfurique introduit et le calcium contenu dans la roche phosphatée, principalement sous forme de carbonate et de phosphate de calcium. La phase aqueuse acide de cette première bouillie résultant de l'attaque ne contient pas ou extrêmement peu d'acide sulfurique libre et sa teneur en P₂O₅ libre est assez élevée.

Avantageusement, la température d'attaque peut être comprise entre 70 et 80°C.

D'une manière préférentielle la concentration en P₂O₅ libre résultant de l'étape d'attaque pourra être de 40 à 45% en poids.

La concentration en SO₃ libre de la phase aqueuse acide de la première bouillie peut être de 0,1 à 0,4 % en poids.

Cette première bouillie est alors directement soumise, dans sa totalité, à une étape de conversion qui consiste à la chauffer à une température supérieure à 90°C, de préférence comprise entre 90 et 105°C. Ce chauffage occasionne de manière connue une solubilisation des cristaux de gypse, une libération du P₂O₅ cocristallisé dans le gypse pendant l'étape d'attaque et une recristallisation du sulfate de calcium sous forme d'hémihydrate.

On remarque qu'après l'ajout d'une source de fluor, avantageusement directement dans la cuve d'attaque de la roche phosphatée, la conversion ultérieure de la première bouillie de dihydrate en hémihydrate devient plus aisée, ce qui se traduit par une diminution de l'acidité nécessaire à cette conversion.

On obtient ainsi d'une manière simple et aisée une seconde bouillie dans laquelle les cristaux d'hémihydrate ont une forme sphérique et sont de taille courante, en présentant par exemple un d₅₀ de 60 µm, ce qui donne un gâteau de filtration présentant un excellent coefficient de filtration.

L'ajout d'une source de fluor permet, même dans les conditions d'une roche phosphatée à taux élevé d'impuretés, l'obtention d'une cristallisation correcte de l'hémihydrate sans devoir nécessairement ajouter de l'acide sulfurique.

L'acide de production a une teneur en SO₃ libre extrêmement faible avantageusement de l'ordre de 0,05 % à moins de 1 % en poids, ce qui en fait un acide phosphorique de qualité. On peut avantageusement obtenir un acide phosphorique de production présentant une teneur en P₂O₅ libre de 35 à 45 % en poids.

Selon une forme de réalisation de l'invention, l'étape de conversion de la première bouillie ne comprend aucune addition d'acide sulfurique. On peut toutefois envisager que le procédé comprenne, pendant l'étape de conversion de la première bouillie, une introduction dans celle-ci d'acide sulfurique. La quantité d'acide sulfurique ajoutée doit cependant être dosée de manière précise pour que, après la filtration de la seconde bouillie, l'acide phosphorique de production contienne une teneur en SO₃ libre inférieure à 2 % en poids, de préférence de l'ordre de 0,05 à 1,5 % en poids, en particulier de l'ordre de 0,05 à moins de 1 % en poids. Il est important de ne pas dépasser cette teneur afin de ne pas polluer l'acide phosphorique par de l'acide sulfurique ce qui le rendrait impropre à l'utilisation en tant qu'acide phosphorique et nécessiterait une étape de désulfatation.

Par source de fluor, il faut entendre suivant l'invention toute composition susceptible de libérer dans la bouillie de l'attaque du fluor. On peut envisager par exemple du CaF₂ ou encore un produit de récupération d'effluent fluoré. On peut envisager l'ajout dosé d'un composé obtenu comme produit de neutralisation d'effluents fluorés qui a été précipité par un composé calcique tel que du carbonate ou de l'oxyde de calcium. La matière solide décantée et séparée de l'effluent peut être introduite directement dans la cuve d'attaque.

Suivant une forme préférée de réalisation de l'invention, le procédé comprend l'étape d'attaque dans un premier réacteur, et un transfert de la première bouillie du premier réacteur à un second réacteur, dans lequel est effectuée l'étape de conversion avec formation de la seconde bouillie, l'étape de séparation étant effectuée sur un filtre. Ce procédé présente l'avantage de pouvoir être utilisé dans une installation existante de production d'acide phosphorique par attaque classique à l'acide sulfurique. Le premier réacteur est le réacteur d'attaque de l'installation classique, dans lequel des conditions d'attaque différentes sont appliquées. Le deuxième réacteur est le réacteur de maturation de l'installation classique. Comme un grossissement des grains de gypse résultant de l'attaque n'est pas nécessaire suivant l'invention, on peut utiliser ce réacteur de maturation comme réacteur de conversion. Enfin le filtre de l'installation classique peut être utilisé pour filtrer de l'hémihydrate au lieu de gypse. Ce filtre peut être n'importe quel dispositif de filtration connu, approprié, par exemple un filtre à bande, un dispositif à cellules filtrantes disposées en carrousel, entre autres.

Le procédé suivant l'invention est avantageusement effectué en continu. De préférence le temps de séjour dans le premier réacteur est de 2 à 4 h et le temps de séjour dans le second réacteur de 0,5 à 1,5 h. Les temps de séjour correspondent aux temps de séjour dans les réacteurs d'attaque et de maturation d'une installation classique.

D'autres modes de réalisation de l'invention sont indiqués dans les revendications annexées.

D'autres détails et particularités de l'invention ressortiront de la description donnée ci-après, à titre non limitatif, et avec référence aux dessins annexés.
La figure 1 représente sous la forme d'un schéma d'écoulement un exemple d'installation mettant en oeuvre un procédé suivant l'invention.
La figure 2 est un graphique illustrant des régions de formation de dihydrate et d'hémihydrate en fonction de la température, de la concentration en P₂O₅ et de la concentration en SO₃.
La figure 3 est un graphique qui illustre les différents processus appliqués pour la production d'acide phosphorique par attaque sulfurique.

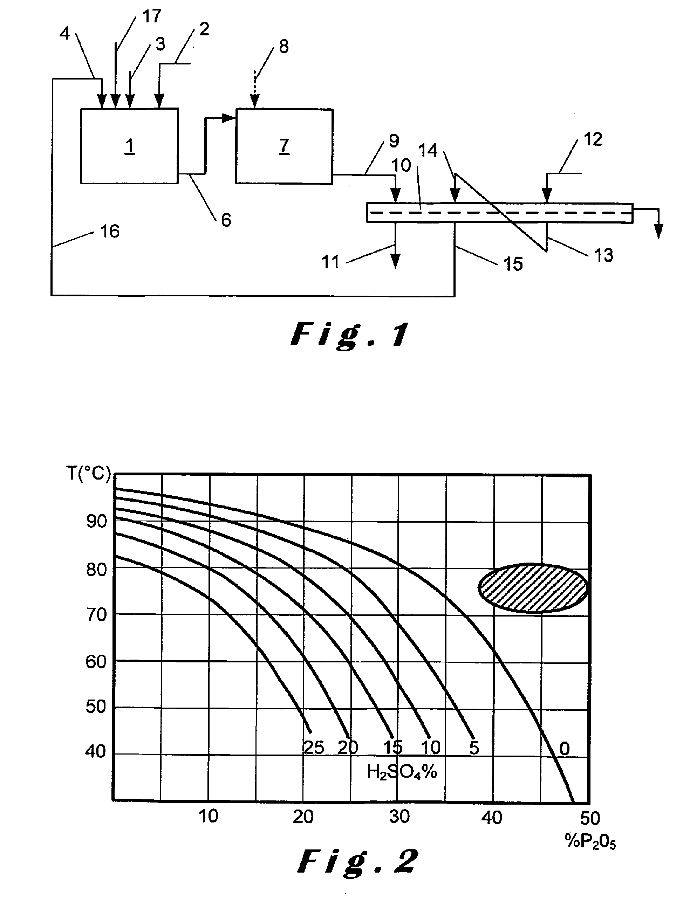

L'installation illustrée sur la figure 1 comprend un réacteur d'attaque 1 dans lequel on introduit en 2 de la roche phosphatée broyée présentant un rapport MER de l'ordre de 20-32 et en 3 de l'acide sulfurique, par exemple de l'acide sulfurique concentré à 98-99 % en poids. Une composition comportant 52 % en poids de CaO et 21% de F par exemple est avantageusement introduite en 17 dans le réacteur 1.

Les conditions opératoires appliquées dans ce réacteur sont les suivantes :

| | | |
|---|---|---|
| Température | : | 70-80°C |
| % P₂O₅ libre | : | 38-50 % en poids |
| % SO₃ libre | : | 0,05 % - < 0,5 % en poids |
| Temps de séjour | : | 2-4 h. |

Contrairement à ce qui est attendu par l'homme de métier, on obtient des cristaux très fins de dihydrate, hétérogènes, mais stables.

En effet, on peut consulter à présent la figure 2. Le graphique représenté est extrait de A.V. Slack, Phosphoric Acid, Vol. 1, Part I, éd. Marcel Dekker Inc., 1968, New York. La température est indiquée en °C en ordonnée, les concentrations en P₂O₅ et en SO₃ en abscisse. Les courbes représentent l'équilibre entre dihydrate et hémihydrate. La région du graphique située en dessous de ces courbes correspond aux conditions de formation de dihydrate, celle située au-dessus de ces courbes à celles de formation d'hémihydrate. L'ellipse en hachuré représente la zone répondant aux conditions préférentielles de l'attaque selon la présente invention. Au contraire de ce qui est prévu à l'examen de ce graphique, on obtient suivant l'invention une bouillie stable de cristaux de dihydrate, et non d'hémihydrate.

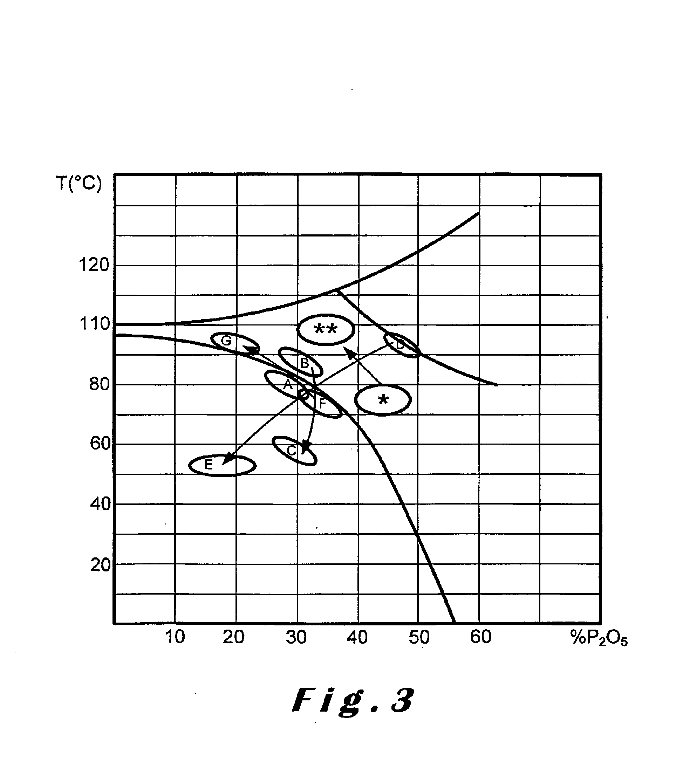

On peut tirer la même conclusion de l'examen du graphique de la figure 3 extrait de P. Becker, Phosphates and Phosphoric Acid. 2e éd., Marcel Dekker Inc., 1989, New York - Bâle. Dans ce graphique la température est indiquée en ordonnée et la concentration en P₂O₅ en abscisse. Dans le coin inférieur gauche du graphique se trouve la région de formation du dihydrate, dans le coin supérieur droit la région de formation de l'anhydrite et entre les deux la région de formation de l'hémihydrate. La zone A correspond aux conditions du procédé classique avec formation du gypse. Les zones B et C, reliées par une flèche, et D et E, reliées par une flèche, correspondent aux conditions de deux procédés formant en premier lieu de l'hémihydrate et convertissant ensuite celui-ci en dihydrate. Les zones F et G reliées par une flèche représentent les conditions d'un procédé formant en premier lieu du dihydrate et convertissant ensuite celui-ci en hémihydrate.

L'ellipse marquée par une astérisque répond aux conditions d'attaque suivant l'invention et l'ellipse marquée par deux astérisques, reliée à la première par une flèche, répond aux conditions de la conversion suivant l'invention.

Selon les connaissances générales de l'homme de métier, on pouvait donc s'attendre à la formation d'hémihydrate dans les deux zones correspondant à ces deux ellipses, ce qui n'est pas le cas et est déjà surprenant en soi.

La totalité de la bouillie de gypse obtenue dans le réacteur 1 est alors transférée par le conduit 6, muni de moyens de transfert connus en soi, à un réacteur de conversion 7. Dans ce réacteur, les conditions opératoires suivantes sont appliquées :

| | | |
|---|---|---|
| Température | : | 90-105°C |
| % P₂O₅ | : | 35-45 % en poids |
| % SO₃ | : | 0,1 % - <1,0 % en poids |
| Temps de séjour | : | 0,5-1,5 h. |

Pour chauffer ce réacteur, on peut appliquer des moyens courants, par exemple un chauffage direct, une injection de vapeur d'eau dans le milieu de conversion ou une combinaison des deux. Toute autre source de chaleur appropriée peut bien entendu être utilisée à cet effet. Sous l'effet de l'augmentation de chaleur, les cristaux de gypse se solubilisent, le P₂O₅ cocristallisé est libéré et le sulfate de calcium recristallise sous forme de cristaux d'hémihydrate relativement purs.

Selon une variante de procédé, il est possible, pour améliorer encore la conversion du gypse en hémihydrate, d'ajouter dans le réacteur de conversion 7 une petite quantité dosée d'acide sulfurique. Cette quantité doit toutefois être telle que la teneur en SO₃ libre dans l'acide de production soit inférieure à 2 % en poids, de préférence à 1%. L'acide de production ne peut pas être pollué par cet ajout d'acide sulfurique.

Le procédé illustré comprend un transfert de la bouillie du réacteur 7 par le conduit 9 vers un filtre 10 de type courant.

Dans une première section du filtre on obtient un filtrat en 11 qui est l'acide phosphorique de production et un gâteau de filtration.

Le procédé illustré comprend deux étapes de lavage du gâteau. Le second lavage est effectué à l'aide d'un liquide de lavage qui est de préférence de l'eau, alimentée en 12.

Le produit de ce lavage obtenu en 13 est une solution aqueuse à faible teneur en acide phosphorique qui sert comme liquide de lavage alimenté en 14 à la première étape de lavage. Le produit de ce premier lavage, obtenu en 15, est une solution aqueuse d'acide phosphorique qui peut être recyclée en 4 au réacteur d'attaque 1, par l'intermédiaire d'un conduit de recyclage 16.

Par rapport au procédé dit classique, le procédé suivant l'invention offre l'avantage d'un rendement d'extraction amélioré, étant donné la recristallisation,et de la production d'un acide à teneur élevée en P₂O₅, avec une teneur de plus de 35% en poids, au lieu des 25 à 30% obtenus par le procédé classique, et cela malgré la teneur élevée en impuretés de la roche de départ. Le gâteau d'hémihydrate sec est bien valorisable dans l'industrie. Ses propriétés de mise en tas sont excellentes, car en présence d'eau ou d'humidité l'hémihydrate se reconvertit en gypse. Ces améliorations sont obtenues d'une manière simple dans une installation existante, sans en augmenter l'encombrement. Le procédé permet en outre de recycler un rejet industriel, l'effluent industriel fluoré, mais aussi d'en retirer une fonction bénéfique pour le procédé.

Le procédé suivant l'invention va être décrit ci-dessous de manière plus détaillée à l'aide d'exemples de réalisation non limitatifs.

### Exemple 1

Un essai pilote a été réalisé avec un phosphate sédimentaire provenant d'Asie Centrale contenant 17% de P₂O₅, 29% de CaO, 2% de F, 34,7% de SiO₂, et un MER de 32.

La distribution granulométrique de la roche broyé était proche de celle généralement utilisée dans les usines d'acide phosphorique (99,8% passant 500µm, 60% passant 150µm et 40% passant 75µm).

Deux cas sont à distinguer :
a) dans la cuve d'attaque on introduit le phosphate sans source externe de fluor.
b) dans la cuve d'attaque on introduit un mélange de phosphate avec une source externe de fluor (avantageusement un produit de récupération d'effluents industriels fluorés) afin de faciliter la conversion dihydrate-hémihydrate.

a) Le phosphate est introduit dans le réacteur d'attaque d'un volume de 30 litres par une vis d'alimentation et le débit (3,2 kg/h) est régulé par un système à perte de poids. Deux pompes dosantes injectent l'acide sulfurique (1,1 kg/h) et l'acide recyclé issu du lavage du gâteau de filtration de la bouillie d'hémihydrate (12 kg/h).
L'attaque du phosphate par l'acide sulfurique a été réalisée dans les conditions suivantes :

| | | |
|---|---|---|
| Teneuren P₂O₅ | : | 39,1% en poids |
| Excès en SO₃ | : | 0,46% en poids |
| Température | : | 80°C |
| Teneur en solides : | : | 32% en poids |

Le débit de sortie de la pulpe d'attaque est d'environ 11 l/h. Le temps de séjour moyen dans le réacteur d'attaque (calculé comme le rapport entre le volume du réacteur et le débit de sortie de la bouillie de dihydrate) est donc d'environ 30 l / 11 l/h = 2,7 heures. Dans ces conditions, on obtient une bouillie stable de cristaux de dihydrate de petite taille (d₅₀ inférieur à 20 µm), avec une distribution de taille monomodale. Il s'agit principalement de cristaux isolés, mais on observe aussi des cristaux en croix et en étoiles. Ces cristaux, qui auraient une très mauvaise filtrabilité, ne sont pas filtrés dans le procédé en question.

La bouillie de gypse obtenue lors de cette première étape est alors réchauffée à 101°C dans un second réacteur de 15 litres. Un deuxième ajout d'acide sulfurique (environ 892 g/h) est réalisé afin de pouvoir obtenir, en présence du haut taux d'impuretés dans la bouillie d'attaque, la conversion des cristaux de gypse en hémihydrate. La teneur en SO₃ libre nécessaire à cette conversion est de 7 % en poids. Ce n'est que dans ces conditions extrêmes en SO₃, caractérisées par une « acidité totale » (% P₂O₅+% SO₃) de 45% en poids, qu'on a pu obtenir la recristallisation du gypse en hémihydrate.

Des cristaux de forme sphérique et caractérisé par d₅₀ = 42 µm ont été obtenus.

L'acide phosphorique ainsi produit contient 38 % en poids de P₂O₅ et 7 % en poids de SO₃ libre. Si un tel mode opératoire était utilisé, une étape de désulfatation de l'acide serait nécessaire, ce qui est à éviter suivant l'invention.
b) Dans le deuxième cas, les paramètres de marche sont similaires au cas précédent, mais on introduit dans la cuve d'attaque un mélange du phosphate avec 10% en poids (par rapport au P₂O₅) de produit de récupération d'effluents industriels fluorés (équivalent à 5% en poids de F). La conversion dihydrate - hémihydrate est nettement plus aisée et, à la même température de 101°C, elle est atteinte pour une « acidité totale » (% P₂O₅+% SO₃) de 38% en poids, ce qui permet de respecter une teneur en SO₃ dans l'acide phosphorique de production inférieure à 2% en poids. Dans ces conditions le procédé de cette invention est applicable.

L'acide phosphorique produit contient 36,2 % en poids de P₂O₅ et 1.8% en poids de SO₃ libre. Le gâteau de filtration de hémihydrate obtenu contient une teneur totale en P₂O₅ de 0,54 % en poids ce qui correspond à un rendement total d'extraction du P₂O₅ (attaque et filtration) de 97,8 % en poids. La teneur en eau libre du gâteau hémihydrate est de 22,9%. L'eau de cristallisation est de 6,4%, ce qui est typique du hémihydrate, et la diffraction par rayon X confirme bien qu'il s'agit de hémihydrate.

### Exemple 2

Une bouillie formée de sulfate de calcium et d'acide phosphorique titrant en poids 41,6 % de P₂O₅, 0,4 % de SO₃, 0,24 % de Al₂O₃, et 0,99 % de F est obtenue par attaque d'un phosphate nord-africain.

Elle est stable, au moins pendant un temps de 8 heures, sous forme de dihydrate lorsque la température est de 78°C.

Ensuite elle est soumise à un ajout d'acide sulfurique, par paliers de 0,2 %. Lorsque la teneur en SO₃ dans la phase liquide est de 0,6 % les deux phases (dihydrate et hémihydrate) sont stables et coexistent. Lorsque la teneur en SO₃ dans la phase liquide est de 0,8 % de SO₃ la conversion en hémihydrate est complète, la phase hémihydrate est désormais la forme stable. La conversion est confirmée par l'observation au microscope de cristaux, mesure de l'eau de cristallisation (6,18 %) et diffraction par rayons X (DRX).

Il doit être entendu que la présente invention n'est en aucune façon limitée aux modes de réalisation décrits ci-dessus et que bien des modifications peuvent y être apportées dans le cadre des revendications annexées.

## Revendications

1. Procédé de production d'acide phosphorique, comprenant
- une attaque en milieu aqueux de roche phosphatée par de l'acide sulfurique à une première température comprise entre 70 et 90°C, avec formation d'une première bouillie de cristaux de sulfate de calcium dihydrate en suspension dans une phase aqueuse acide, la phase aqueuse acide de cette bouillie présentant une teneur en P₂O₅ libre comprise entre 38 et 50 % en poids et une teneur en SO₃ libre inférieure à 0,5 % et supérieure à 0,05 % en poids,
- une conversion de cette première bouillie par chauffage à une température supérieure à 90°C, avec solubilisation des cristaux de sulfate de calcium dihydrate et recristallisation du sulfate de calcium solubilisé donnant lieu à une seconde bouillie formée de cristaux de calcium hémihydrate en suspension dans une phase aqueuse à base d'acide phosphorique, et
- une séparation dans la seconde bouillie entre un acide phosphorique de production, présentant une teneur en SO₃ libre inférieure à 2 % et supérieure à 0,05 % en poids, et un gâteau de séparation à base de sulfate de calcium hémihydrate,
**caractérisé en ce qu'**il comprend en outre, pendant l'attaque, un ajout d'une source de fluor dans la première bouillie en une teneur de 1% à 5% en poids de F par rapport au P₂O₅ contenu dans la roche phosphatée.

2. Procédé suivant la revendication 1, **caractérisé en ce que** la roche phosphatée présente un rapport pondéral (Al₂O₃ + Fe₂O₃ + MgO)/P₂O₅ X 100 supérieur à 10.

3. Procédé suivant l'une des revendications 1 et 2, **caractérisée en ce que** la source de fluor est un composé fluoré susceptible de libérer du fluor dans la bouillie d'attaque.

4. Procédé suivant la revendication 3, **caractérisé en ce que** ladite source de fluor est un produit de récupération d'effluent fluoré obtenu par neutralisation et précipitation de celui-ci par un composé calcique, cette composition précipitée étant introduite dans ladite première bouillie.

5. Procédé suivant l'une des revendications 1 à 4, **caractérisé en ce qu'**il comprend, pendant l'étape de conversion de la première bouillie, une introduction dans celle-ci d'acide sulfurique.

6. Procédé suivant l'une des revendications 1 à 4, **caractérisé en ce que** l'étape de conversion de la première bouillie ne comprend aucune addition d'acide sulfurique.

7. Procédé suivant l'une quelconque des revendications 1 à 6, **caractérisé en ce qu'**il comprend l'étape d'attaque dans un premier réacteur, et un transfert de la première bouillie du premier réacteur à un second réacteur dans lequel est effectuée l'étape de conversion, avec la formation de la seconde bouillie, l'étape de séparation étant effectuée sur un filtre.

8. Procédé suivant la revendication 7, **caractérisé en ce que** le chauffage a lieu par chauffage du second réacteur, par injection de vapeur d'eau dans la seconde bouillie, ou par ces deux processus simultanément.

9. Procédé suivant l'une ou l'autre des revendications 7 et 8, **caractérisé en ce que** le temps de séjour dans le premier réacteur est de 2 à 4 h et le temps de séjour dans le second réacteur de 0,5 à 1,5 h.

10. Procédé suivant l'une quelconque des revendications 1 à 9, **caractérisé en ce que** l'acide phosphorique de production présente une teneur en P₂O₅ de 35 à 45 % en poids.

11. Procédé suivant l'une quelconque des revendications 1 à 10, **caractérisé en ce qu'**il est effectué en continu.

## Patentansprüche

1. Verfahren zur Herstellung von Phosphorsäure, welches Folgendes umfasst:
- einen Aufschluss in wässrigem Milieu von phosphathaltigem Gestein mit Schwefelsäure bei einer ersten Temperatur zwischen 70 und 90 °C, mit Bildung einer ersten Maische von Calciumsulfatkristallen in Suspension in einer sauren wässrigen Phase, wobei die saure wässrige Phase dieser Maische einen Gehalt zwischen 38 und 50 Gew.% an freiem P₂O₅ und einen Gehalt von weniger als 0,5 Gew.% und mehr als 0,05 Gew.% an freiem SO₃ aufweist,
- eine Konversion dieser ersten Maische durch Erwärmen auf eine Temperatur über 90 °C, mit Solubilisierung der Calciumsulfatkristalle und Rekristallisation des solubilisierten Calciumsulfats, wodurch eine zweite Maische entsteht, bestehend aus Kristallen von Calcium-Hemihydrat in Suspension in einer wässrigen Phase auf Basis von Phosphorsäure, und
- eine Separation in der zweiten Maische zwischen einer produzierten Phosphorsäure, mit einem Gehalt von weniger als 2 Gew.% und mehr als 0,05 Gew.% an freiem SO₃, und einem Separationskuchen auf Basis von Calciumsulfat-Hemihydrat,
**dadurch gekennzeichnet, dass** es ferner, während des Aufschlusses, den Zusatz einer Fluorquelle zur ersten Maische mit einem Gehalt von 1 Gew.% bis 5 Gew.% an F im Vergleich zum Gehalt an P₂O₅ im phosphathaltigen Gestein umfasst.

2. Verfahren nach Anspruch 1, **dadurch gekennzeichnet, dass** das phosphathaltige Gestein ein Gewichtsverhältnis (Al₂O₃ + Fe₂O₃ + MgO)/ P₂O₅ X 100 von mehr als 10 aufweist.

3. Verfahren nach irgendeinem der Ansprüche 1 und 2, **dadurch gekennzeichnet, dass** die Fluorquelle eine Fluorverbindung ist, die Fluor in der Aufschlussmaische freisetzen kann.

4. Verfahren nach Anspruch 3, **dadurch gekennzeichnet, dass** die erwähnte Fluorquelle ein Rückgewinnungsprodukt von fluorhaltigem Abwasser ist, erhalten durch Neutralisierung und Ausfällen davon durch eine Calciumverbindung, wobei diese ausgefällte Zusammensetzung der erwähnten ersten Maische zugesetzt wird.

5. Verfahren nach irgendeinem der Ansprüche 1 bis 4, **dadurch gekennzeichnet, dass** es, während des Schrittes der Konversion der ersten Maische, eine Hinzufügung einer Schwefelsäure dazu umfasst.

6. Verfahren nach irgendeinem der Ansprüche 1 bis 4, **dadurch gekennzeichnet, dass** der Schritt der Konversion der ersten Maische keine Hinzufügung von Schwefelsäure umfasst.

7. Verfahren nach irgendeinem der Ansprüche 1 bis 6, **dadurch gekennzeichnet, dass** es den Aufschlussschritt in einem ersten Reaktor, und einen Transfer der ersten Maische aus dem ersten Reaktor in einen zweiten Reaktor umfasst, in dem der Schritt der Konversion stattfindet, mit der Bildung der zweiten Maische, wobei der Schritt der Separation auf einem Filter ausgeführt wird.

8. Verfahren nach Anspruch 7, **dadurch gekennzeichnet, dass** die Erwärmung durch Erwärmung des zweiten Reaktors, durch Injektion von Wasserdampf in die zweite Maische, oder durch beide Verfahren gleichzeitig stattfindet.

9. Verfahren nach dem einen oder anderen der Ansprüche 7 und 8, **dadurch gekennzeichnet, dass** die Verweilzeit im ersten Reaktor zwischen 2 und 4 Stunden und die Verweilzeit im zweiten Reaktor 0,5 bis 1,5 Stunden betragen.

10. Verfahren nach irgendeinem der Ansprüche 1 bis 9, **dadurch gekennzeichnet, dass** die produzierte Phosphorsäure einen Gehalt von 35 bis 45 Gew.% an P₂O₅ aufweist.

11. Verfahren nach irgendeinem der Ansprüche 1 bis 10, **dadurch gekennzeichnet, dass** es kontinuierlich ausgeführt wird.

## Claims

1. A method for producing phosphoric acid comprising
- etching phosphate rock in an aqueous medium with sulfuric acid at a first temperature comprised between 70 and 90°C, with formation of a first slurry of calcium sulfate dihydrate crystals suspended in an acid aqueous phase, the acid aqueous phase of this slurry having a free P₂O₅ content comprised between 38 and 50% by weight and a free SO₃ content of less than 0.5% and greater than 0.05% by weight,
- converting this first slurry by heating to a temperature above 90°C, with solubilization of the calcium sulfate dihydrate crystals and recrystallization of the solubilized calcium sulfate giving rise to a second slurry formed with calcium hemi-hydrate crystals suspended in an aqueous phase based on phosphoric acid, and
- separating in the second slurry between a production phosphoric acid, having a free SO₃ content of less than 2% and greater than 0.05% by weight, and a separation cake based on calcium sulfate hemi-hydrate,
**characterized in that** it further comprises, during the etching, addition of a fluorine source in the first slurry in a content from 1% % to 5% % by weight of F relatively to the P₂O₅ contained in the phosphate rock.

2. The method according to claim 1, characterizing that the phosphate rock has a weight ratio (Al₂O₃ + Fe₂O₃ + MgO)P₂O₅ X 100 greater than 10.

3. The method according to one of claims 1 and 2, **characterized in that** the fluorine source is a fluorinated compound which may release fluorine in the etching slurry.

4. The method according to claim 3, **characterized in that** said fluorine source is a recovery product of a fluorinated effluent obtained by a neutralization and precipitation of the latter with a calcium compound, this press be tasted composition being introduced into said first slurry.

5. The method according to one of claims 1 to 4, **characterized in that** it comprises, during the conversion step of the first slurry, an introduction of sulfuric acid into the latter.

6. The method according to one of claims 1 to 4, **characterized in that** the conversion step of the first slurry does not comprise any addition of sulfuric acid.

7. The method according to any of claims 1 to 6, **characterized in that** it comprises the etching step in a first reactor, and a transfer of the first slurry from the first reactor to a second reactor in which the conversion step is carried out, with formation of the second slurry, the separation step being carried out on a filter.

8. The method according to claim 7, **characterized in that** the heating takes place by heating the second reactor, by injecting steam into the second slurry, or by both of these processes simultaneously.

9. The method according to either one of claims 7 and 8, **characterized in that** the dwelling time in the first reactor is from 2 to 4 hrs and the dwelling time in the second reactor is from 0.5 to 1.5 hrs.

10. The method according to any of claims 1 to 9, **characterized in that** the production phosphoric acid has a P₂O₅ content from 35 to 45% by weight.

11. The method according to any of claims 1 to 10, **characterized in that** it is carried out continuously.
